# FASCICULE DE BREVET EUROPEEN

(11) **EP 0 890 116 B1**
(45) Date de publication et mention de la délivrance du brevet: **11.12.2002**
(21) Numéro de dépôt: 97919444.6
(22) Date de dépôt: 28.03.1997
(51) Int. Cl.: G01T 7/00, G01T 1/169

(54) **DISPOSITIF ET PROCEDE DE LOCALISATION A DISTANCE DE SOURCES ALPHA**
VERFAHREN UND VORRICHTUNG ZUR FERNLOKALISIERUNG EINER ALPHA-RADIOAKTIVEN QUELLE
REMOTE ALPHA SOURCE LOCATION DEVICE AND METHOD

(30) Priorité: 29.03.1996 FR 9603976
(43) Date de publication de la demande: 13.01.1999
(73) Titulaire: COMMISSARIAT A L'ENERGIE ATOMIQUE, 75015 Paris (FR); Algade, 87250 Bessines-sur-Gartempe (FR)
(72) Inventeur: PINEAU, Jean-François, F-87240 Saint-Sylvestre (FR); IMBARD, Gérald, F-84000 Avignon (FR)
(74) Mandataire: Dubois-Chabert, Guy
(86) Numéro de dépôt international: FR9700569
(87) Numéro de publication internationale: WO97037244

(56) Documents cités:
- EP-A- 0 425 333
- EP-A- 0 542 561
- DE-A- 3 637 276
- PROCEEDINGS OF THE ANNUAL INTERNATIONAL CARNAHAN CONFERENCE ON SECURITY TECHNOLOGY, ALBUQUERQUE, OCT. 12 - 14, 1994, no. CONF. 28, 12 Octobre 1994, SANSON L D, pages 6-19, XP000492095 KOSTER J E ET AL: "ALPHA DETECTION AS A PROBE FOR COUNTER PROLIFERATION"

## Description

### Domaine technique

La présente invention concerne un dispositif et un procédé de localisation et de visualisation à distance de sources de particules alpha, c'est-à-dire de particules dont l'énergie est généralement inférieure à 10 MeV.

L'invention est utilisable notamment dans le domaine de la radioprotection pour situer sur une surface ou dans un volume des sources radioactives.

Le dispositif, objet de l'invention, est applicable dans de nombreux autres domaines tels que le déclassement des installations nucléaires, les opérations de démantèlement et de maintenance, l'inventaire radioactif, les interventions post-accidentelles ou l'aide aux opérateurs en matière de suivi de procédé en exploitation.

L'invention trouve également des applications dans la détection de fuites de gaz radioactifs et la détection de la présence d'un gaz radioactif (en particulier le radon) ou d'une contamination radioactive sous forme d'un aérosol.

De façon générale, l'invention concerne, pour l'essentiel, la détection et la localisation de rayonnements particulaires fortement ionisants (à fort transfert linéique d'énergie).

### Etat de la technique antérieure

Le rayonnement α est la radioactivité naturelle la plus fréquente survenant lors de la désintégration de noyaux dont la masse atomique est supérieure à 200. Il se traduit par l'émission de particules α qui sont des atomes d'hélium doublement ionisés.

Les détecteurs de particules fournissent généralement des informations résultant de l'interaction des particules qui les traversent avec la partie sensible de ces derniers.

Lorsqu'une particule α traverse un milieu, elle subit une perte d'énergie due essentiellement à l'ionisation et à l'excitation du milieu traversé. Les phénomènes de diffusion et de rayonnement de freinage apparaissent comme négligeables.

L'ionisation peut être comprise comme l'arrachement d'un ou plusieurs électrons à un atome initialement neutre. L'électron arraché peut rester libre ou se fixer sur un autre atome et former un ion négatif.

Deux phénomènes majeurs entrent en jeu lors de la création de ces paires d'ions positifs et négatifs : environ 1/3 des ionisations sont produites par ionisation primaire, c'est-à-dire par interaction directe avec les particules α, les 2/3 restants étant créées par ionisation secondaire, produite par des électrons rapides émis lors de l'ionisation primaire. Ces électrons rapides portent le nom de "rayons δ".

Comme indiqué précédemment, le passage d'une particule α dans un milieu peut aussi se traduire par la simple excitation de ce milieu.

On considère qu'un atome est excité lorsqu'il passe d'un état énergétique stable à un état de plus haute énergie. L'énergie d'excitation est toutefois insuffisante pour éjecter un électron. En général, l'énergie consommée par excitation est ensuite dissipée soit de façon non radiative, c'est-à-dire sous forme d'énergie thermique de vibration ou de translation, soit de façon radiative, c'est-à-dire par émission de photons.

On appelle scintillateur un milieu dans lequel une fraction non négligeable de l'énergie absorbée est restituée de façon radiative par émission de photons.

Les détecteurs de particules α connus comportent ainsi en général un milieu scintillant, solide ou liquide, permettant de "convertir" les rayonnements α en photons et un système de photomultiplicateur ou de surface sensible pour détecter les photons émis par le scintillateur.

Ces détecteurs ne sont cependant pas capables de localiser une source de rayonnement α à distance. En effet, le libre parcours des particules α dans l'air est très faible et il est nécessaire d'approcher le détecteur au voisinage direct de la source pour effectuer des mesures.

Les scintillateurs ne sont pas nécessairement solides ou liquides. Ils peuvent se présenter également sous forme gazeuse.

La scintillation des gaz excités par des particules nucléaires est connue depuis le début des études sur la radioactivité, mais ce n'est qu'en 1951, grâce à l'utilisation des photomultiplicateurs, que l'étude du mécanisme de l'émission liée au passage d'une particule dans un gaz a pu être entreprise par Grün et Schopper. Un an plus tard, C. Muehlhause utilise un gaz comme scintillateur en physique nucléaire.

De nombreux travaux ont été effectués sur la scintillation des gaz rares. En effet, dans un gaz quelconque, les atomes peuvent interagir entre eux et, par là même, transférer une partie de leur énergie d'excitation. Or, si l'atome se trouve dans une molécule complexe, le transfert d'énergie peut s'effectuer sous forme d'énergie thermique de vibration ou de rotation, ne créant donc pas d'émission lumineuse. Les gaz rares par contre, du fait de leur structure électronique d'une grande stabilité, ne peuvent, lors d'une collision, que transférer l'énergie d'un atome excité à un autre.

Des études ont montré que l'air a également des propriétés de scintillation et que le spectre de l'air, excité par des sources de rayonnement α, est constitué d'une série de bandes identiques à celles observées dans le spectre d'émission de l'azote.

L'argon présent dans l'air a d'excellentes propriétés d'émission mais sa proportion très faible fait que sa contribution à la luminescence de l'air est négligeable.

L'oxygène de l'air n'émet pas de fluorescence mais agit au contraire comme une substance d'extinction. En effet, même une faible quantité d'oxygène mélangée à un gaz peut contrarier ses propriétés de scintillation. A titre d'exemple, la présence de 2% d'oxygène dans un mélange d'oxygène et de xénon provoque une diminution de l'ordre de 70% de l'amplitude de scintillation du xénon.

L'air, du fait de ce phénomène d'extinction, possède un très faible rendement de scintillation. Le rendement de scintillation n'est que de quelques photons par particule α.

Dans l'azote pur, le nombre de photons émis est largement supérieur au nombre de photons émis dans l'air. Toutefois, le phénomène de scintillation reste relativement faible.

Le tableau I ci-après montre que la pression du gaz est également un paramètre important pour l'effet de scintillation des gaz et en particulier de l'azote.

Le tableau I donne un exemple du nombre de photons émis par particule α en fonction de la pression du gaz scintillateur (azote ) pour une source de rayonnement particulière.

**TABLEAU I**

| **Pression (hPa)** | **Nb de photons émis par α** |
|---|---|
| 331 | 1970 |
| 350 | 1310 |
| 833 | 1060 |

Il apparaît que le nombre total de photons diminue avec une augmentation de la pression. Ceci est dû au fait qu'à plus haute pression, le nombre de collisions entre atomes et molécules du gaz augmente. Le nombre croissant des collisions entraîne une perte d'énergie non radiative plus importante.

En raison des propriétés de scintillation médiocres de l'azote et en particulier de l'air, ainsi que du coût élevé des gaz rares, les seules utilisations de gaz comme scintillateurs se limitent à des dispositifs de comptage expérimentaux.

Les documents 1 et 2, dont la référence est indiquée à la fin de la présente description donnent des exemples d'installations de détection utilisant un gaz tel que, par exemple, l'azote comme scintillateur. Dans ces installations, la source et le scintillateur sont disposés à proximité d'un détecteur, tel qu'une chambre photographique ou un photomultiplicateur, afin de réaliser des comptages ou des études spectroscopiques de la luminescence du gaz scintillateur.

Le document 3, dont la référence est également donnée à la fin de la description, explique que ni l'azote ni l'air ne présentent d'intérêt pratique comme scintillateur. La présence d'azote dans un compteur à scintillation utilisant un gaz rare est même considérée comme indésirable.

Le document (4), dont les références sont encore précisées à la fin de la description, décrit une détection de particules α nécessitant un transport d'ions secondaires.

### Exposé de l'invention

L'invention part du fait surprenant découvert par les inventeurs que malgré les propriétés de scintillation très médiocres de l'azote et surtout d'un mélange azote-oxygène comme l'air, il n'était pas impossible d'utiliser ces gaz comme scintillateur pour une localisation à distance de sources radioactives émettrices de particules lourdes chargées.

On entend par localisation à distance une localisation qui se fait à une distance de la source qui peut être très largement supérieure au parcours des particules α dans le gaz ou dans l'air (qui est de quelques centimètres).

L'invention concerne en effet un procédé de localisation à distance de sources de particules α dans un environnement, dans lequel on utilise un gaz contenant de l'azote et emplissant l'espace environnant, pour transformer des particules α émises par les sources en un rayonnement photonique dont la longueur d'onde se situe, par exemple, dans la bande de l'ultraviolet ; et dans lequel on forme une image dudit rayonnement sur une surface photosensible.

Bien que l'invention ne se limite pas au cas où le rayonnement photonique a une longueur d'onde dans la bande de l'ultraviolet, ce rayonnement sera désigné par le rayonnement U.V. dans la suite de la description ; pour des raisons de simplification.

La localisation des sources de particules α se distingue de la simple détection de particules α notamment en ce que les sources ne sont pas nécessairement placées sous un détecteur ou à proximité de celui-ci, mais dispersées dans l'environnement. La localisation consiste par exemple à déterminer et à visualiser, dans l'environnement, l'emplacement et la forme d'une ou plusieurs zones contaminées.

Ceci est rendu possible grâce à l'image du rayonnement U.V. La limitation en distance de détection ne tient qu'à l'absorption des U.V. par l'atmosphère, des distances de détection allant jusqu'à plusieurs centaines de mètres, voire plusieurs kilomètres sont envisageables.

De façon très avantageuse, notamment pour des raisons de coût, on peut utiliser l'air comme gaz scintillant dans une application particulière.

Selon un aspect de l'invention, il est possible de délimiter l'environnement avec une enceinte sensiblement imperméable au gaz et avec une paroi au moins localement transparente au rayonnement U.V., on emplit alors l'enceinte d'un gaz contenant de l'azote et on forme sur la surface sensible l'image du rayonnement photonique induit, à travers la paroi transparente.

L'environnement au sens de l'invention se limite dans ce cas au volume intérieur de l'enceinte. Ce volume est, pour ce type d'application, plus réduit que le volume global de la pièce dans laquelle on opère.

On peut effectivement envisager d'augmenter ou de diminuer la pression dans l'enceinte pour, par exemple, limiter les fuites du gaz de remplissage ou éviter sa pollution.

Il est ainsi possible de contrôler plus facilement le gaz emplissant l'environnement et d'agir sur sa composition, ou éventuellement sur sa pression.

Lorsqu'on utilise une surface sensible dont le spectre de sensibilité s'étend au-delà du spectre d'émission ultraviolet de l'azote excité par les particules α, il peut être avantageux de former l'image du rayonnement ultraviolet en l'absence de lumière visible. Cette mesure permet d'améliorer le rapport signal sur bruit de l'image.

Une autre mesure permettant d'améliorer l'image consiste à la former à travers un filtre laissant sélectivement passer le rayonnement ultraviolet, en particulier pour des longueurs d'ondes correspondant à la scintillation de l'azote.

Il peut aussi être avantageux, afin de faciliter l'exploitation du système de localisation à distance, de former l'image du rayonnement photonique (ultraviolet) en présence de lumière visible artificielle. Cette lumière visible artificielle peut, du fait de sa nature oscillatoire liée à la fréquence du courant d'alimentation, être soustraite numériquement de l'image totale constituée de l'image U.V. et de l'image visible.

Pour faciliter le repérage des sources sur l'image du rayonnement ultraviolet, il est possible de superposer à l'image une grille de repérage.

Une solution particulièrement intéressante consiste à former, outre l'image du rayonnement ultraviolet, une image de lumière visible de l'environnement. Ces deux images peuvent alors être superposées pour repérer plus facilement la position des sources par rapport à des objets placés dans l'environnement.

Dans ce cas, il est possible notamment de réaliser l'image de lumière visible sous un éclairage artificiel de l'environnement.

L'éclairage artificiel, dont l'émission est sensible à la fréquence du courant d'alimentation peut en effet, si nécessaire, être numériquement retranché de l'image du rayonnement ultraviolet lorsque l'élément sensible est un capteur électronique.

L'invention concerne également un dispositif de localisation à distance de sources de particules α. Le dispositif comprend une surface sensible aux rayonnements ultraviolets, un milieu gazeux scintillateur comprenant de l'azote et emplissant l'environnement, et des moyens optiques pour former une image du rayonnement ultraviolet de l'environnement sur la surface sensible. Le rayonnement ultraviolet provient de la scintillation du milieu gazeux qui est excité par les particules α émises par la ou les sources.

Le dispositif peut comporter une caméra qui est équipée de la surface sensible. Celle-ci est formée, par exemple, d'une matrice de photodiodes sensibles au rayonnement ultraviolet et, éventuellement, à la lumière visible.

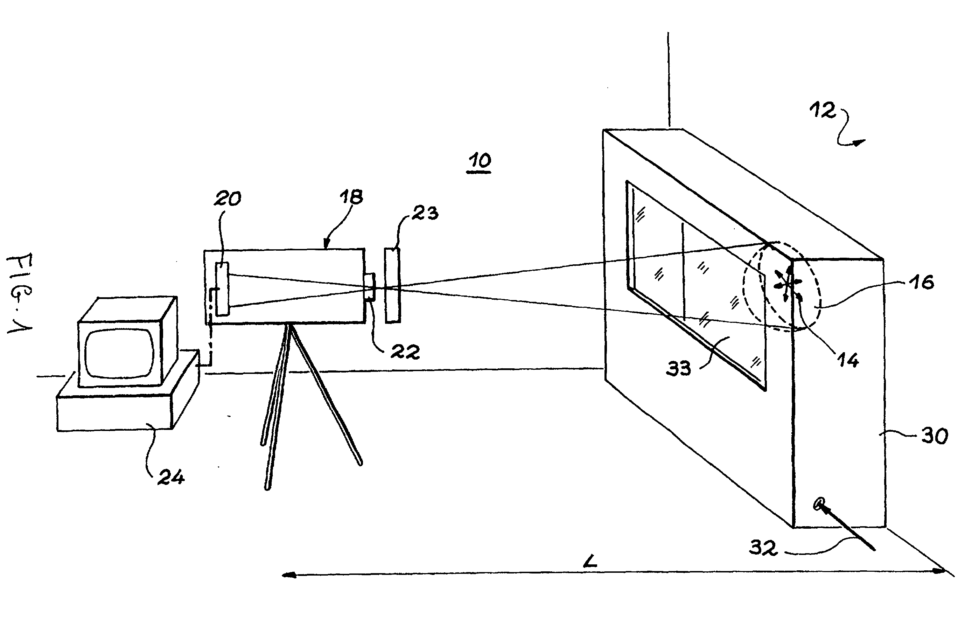

D'autres caractéristiques et avantages de l'invention ressortiront de la description qui va suivre en référence à la figure du dessin annexé, donnée à titre purement illustratif et non limitatif.

### Brève description de la figure

La figure unique représente de façon schématique les éléments du dispositif de l'invention pour localiser dans un environnement des sources de rayonnement α.

### Exposé détaillé de modes de mise en oeuvre de l'invention

La figure unique montre une pièce 10 dont l'un des murs 12 présente une ou plusieurs sources 14 de rayonnement α. Il s'agit, par exemple, d'une contamination radioactive. Les particules α émises par la source sont rapidement arrêtées par l'air de la pièce 10. Une calotte entourant la source indique schématiquement le parcours moyen maximal des particules α et délimite une zone dite "zone d'effet scintillant" 16.

Dans cette zone 16, les particules α interagissent avec les atomes d'azote pour provoquer une scintillation. La scintillation se traduit par l'émission de photons ultraviolets qui se propagent librement dans la pièce. En effet, les photons ultraviolets n'interagissent quasiment pas avec le gaz emplissant la pièce 10. Une caméra ou chambre photographique 18, vue en coupe, comporte une surface 20 sensible aux rayonnements ultraviolets et un système optique 22 pour former une image du rayonnement ultraviolet sur la surface sensible 20.

En pratique, le système optique 22 est prévu pour former une image du mur 12 et de la zone 16 sur la surface sensible 20 pour des rayonnements dont la longueur d'onde est comprise généralement entre 200 et 400 nm. Tout système optique ou catadioptrique comme, par exemple, un objectif de type U.V. NIKKOR peut convenir.

La surface sensible 22 peut être une pellicule photographique ou, préférentiellement, une matrice de capteurs optiques électroniques, tels que des photodiodes.

Il s'agit, par exemple, d'un détecteur de type CCD (à transfert de charge) de 512x512 pixels avec une matrice de 12,3x12,3 cm et dont chaque pixel a une dimension de 24 µmx24 µm.

Le détecteur est relié à un système 24 d'acquisition et de gestion du détecteur de type connu.

Il s'agit par exemple d'un contrôleur de type ST 138.

La fréquence de 50 kHz apparaît comme suffisante pour effectuer des mesures. En effet, comme le phénomène de scintillation de l'azote crée peu de photons, il n'est en général pas nécessaire de lire le détecteur à une fréquence plus élevée. Cependant, pour soustraire numériquement, en cas de besoin, l'influence de la lumière artificielle, il peut être utile de travailler à des fréquences plus élevées, en additionnant les images obtenues.

La faible quantité d'événements nucléaires étant préjudiciable à la détection par le dispositif, il est possible de profiter du caractère statistique d'apparition des événements pour reconstituer "l'image radiative" de la scène. L'acquisition intègre donc le signal en sommant un grand nombre d'images brutes ou corrigées.

Le système d'acquisition 24 comporte également des moyens de visualisation de l'image formée sur le détecteur, tels qu'un moniteur ou un écran vidéo, par exemple. La visualisation des images peut ainsi se faire en temps réel.

Le spectre de sensibilité de la surface 22 correspond par exemple à une plage de longueurs d'ondes s'étendant de 200 nm à 400 nm. Toutefois, on peut également utiliser une surface sensible dans un spectre plus large et associer au système optique 22 un filtre interférentiel 23 ne laissant passer que les rayonnements UV dans une gamme de longueurs d'ondes choisies.

Dans une mise en oeuvre particulière, il est possible également d'utiliser avantageusement un spectre plus étendu de la surface sensible pour former en outre une image de lumière visible de la pièce 10. Cette image visible peut également être visualisée sur l'écran vidéo.

Cette image de lumière visible permet, lorsqu'elle est superposée à l'image du rayonnement ultraviolet, de repérer plus facilement la position des sources de rayonnement α, notamment par rapport aux parois de la pièce ou d'autres objets qui y sont disposés.

Grâce au système d'acquisition et de gestion du détecteur, il est possible d'additionner ou de soustraire numériquement les données correspondant à l'image de lumière visible et l'image du rayonnement ultraviolet. Il est également possible de soustraire à l'image un "bruit de fond" enregistré séparément.

Le système d'acquisition et de gestion permet aussi de modifier numériquement la sensibilité et la résolution des images, ou d'agrandir tout ou partie de l'image.

L'oxygène présent dans l'air a un effet négatif sur le phénomène de scintillation de l'azote contenu dans l'air. Comme le montre la figure, pour limiter cet effet, il est possible de délimiter dans la pièce un environnement plus petit dans lequel il est possible de contrôler plus facilement la composition du gaz entourant la source.

Ainsi, une enceinte 30, sensiblement imperméable au gaz est disposée dans la pièce 10 en un endroit dans lequel on présume l'existence d'une source de particules α que l'on souhaite localiser. Dans le cas de la figure, l'enceinte 30 est adossée à la paroi 12 et délimite un espace de volume inférieur au volume de la pièce 10. Cet espace constitue alors l'environnement au sens de l'invention, dans lequel la source doit être localisée. Cette enceinte peut avantageusement être constituée par la boîte à gants ou par l'enceinte blindée dont on désire étudier la contamination des parois internes.

L'enceinte présente des dimensions qui sont supérieures au parcours maximal moyen des particules α dans le gaz, c'est-à-dire supérieures aux dimensions de la zone d'effet scintillant 16.

Un générateur d'azote 32 est relié à l'enceinte 30 pour augmenter la teneur en azote dans l'enceinte. Des gaz autres que l'azote tels que certains gaz rares comme l'Ar, Na, Kr et Xe ou tout mélange de ces gaz entre eux peuvent également être insufflés dans l'enceinte 30 afin d'améliorer le phénomène de scintillation.

Il est aussi possible d'éliminer au moins en partie l'oxygène contenu dans l'enceinte 30 en y provoquant une combustion ou une réaction d'oxydation par catalyseur.

L'enceinte est réalisée en un matériau transparent au rayonnement ultraviolet ou comporte un hublot 33 afin de laisser passer les photons de scintillation vers la caméra.

Finalement, il apparaît que, grâce au dispositif de l'invention et son procédé de mise en oeuvre, il est possible de localiser une source de rayonnement α a une distance bien supérieure au libre parcours moyen des particules α.

En effet, alors que la distance parcourue par une particule α avant interaction est de l'ordre de quelques centimètres, la distance L séparant la source à localiser de la caméra de mesure peut être de plusieurs kilomètres. Elle est ajustable notamment par le choix de la distance focale du système optique.

Comme indiqué ci-dessus, le dispositif de l'invention peut trouver des utilisations pour la détection de sources radioactives. Il peut aussi être mis à profit pour déceler dans l'environnement un gaz radioactif émetteur de particules α.

A titre d'exemple, pour déceler une fuite dans une cuve telle qu'une cuve de méthanier, il est possible d'injecter dans la double coque à l'extérieur de la cuve un gaz contenant des sources de particules α, tel que le radon, et de former une image de la paroi interne de la cuve. Cette image fait alors apparaître l'endroit de la fuite, où se produit une scintillation, provoquée par l'interaction des particules α émises par le radon et l'air ambiant.

### DOCUMENTS CITES DANS LA DESCRIPTION

***(1)***
   Gaseous Scintillation Counting de C. Eggler et al. dans Nucleonics, Avril 1956, pages 34 et 35.
(2)
   A spectroscopic Study of Alpha-ray-Induced Luminescence in Gases de S. Dondes, Radiation research 27, 1966, pages 174-209.
***(3)***
   The Theory and Practice of Scintillation Counting de J.B. Birks, Pergamon Press, page 578 et page 592.
***(4)***
   Proceegings of the Annual International Carnahan Conference on Security Technology, Albuquerque, Oct. 12-14, 1994, N° CONF. 28, 12 Octobre 1994, Sanson L.D., pages 6-19, XP00.0492095, Koster J.E. et al.: "Alpha Detection as a Probe for Counter Proliferation".

## Revendications

1. Procédé de localisation à distance de sources (14) de particules α dans un environnement (10, 30), dans lequel on utilise un gaz contenant de l'azote comme scintillateur et emplissant l'environnement, pour transformer les particules α émises par les sources (14) en un rayonnement photonique, et dans lequel on forme une image du rayonnement photonique sur une surface photosensible.

2. Procédé selon la revendication 1, **caractérisé en ce qu'**on utilise un gaz contenant de l'azote pour transformer les particules α émises par les sources (14) en un rayonnement photonique ultraviolet.

3. Procédé selon la revendication 1 ou 2, **caractérisé en ce que** l'on délimite l'environnement avec une enceinte (30) sensiblement imperméable au gaz et avec une paroi (32) au moins localement transparente au rayonnement photonique, on emplit l'enceinte de gaz contenant de l'azote et on forme l'image du rayonnement photonique sur la surface sensible, à travers ladite paroi (32).

4. Procédé selon l'une quelconque des revendications 1 à 3, **caractérisé en ce que** l'on forme l'image du rayonnement photonique en l'absence de lumière visible.

5. Procédé selon l'une quelconque des revendications 1 à 3, **caractérisé en ce que** l'on forme l'image du rayonnement photonique à travers un filtre (23) laissant sélectivement passer des rayonnements ultraviolets.

6. Procédé selon l'une quelconque des revendications 1 à 3, **caractérisé en ce qu'**on forme l'image du rayonnement photonique en présence de lumière visible artificielle.

7. Procédé selon l'une quelconque des revendications 1 à 3, **caractérisé en ce que** l'on forme en outre une image de lumière visible de l'environnement.

8. Procédé selon la revendication 7, **caractérisé en ce que** l'on réalise l'image de lumière visible sous un éclairage artificiel de l'environnement.

9. Procédé selon la revendication 7, **caractérisé en ce que** l'on superpose l'image de lumière visible et l'image du rayonnement photonique.

10. Procédé selon l'une quelconque des revendications précédentes, **caractérisé en ce que** l'on utilise l'air comme scintillateur pour transformer les particules α émises par les sources (14) en rayonnement ultraviolet.

11. Dispositif de localisation à distance de sources de particules α dans un environnement, le dispositif comprenant une surface (20) sensible aux rayonnements ultraviolets, un milieu gazeux scintillateur comprenant de l'azote et emplissant l'environnement, et des moyens optiques (22) pour former une image de rayonnement ultraviolet de l'environnement sur la surface sensible.

12. Dispositif selon la revendication 11, **caractérisé en ce qu'**il comporte une enceinte (30) sensiblement imperméable au gaz pour délimiter l'environnement, et pourvue d'une paroi au moins localement transparente aux rayonnements ultraviolets pour former l'image du rayonnement sur la surface sensible, la surface sensible étant disposée à l'extérieur de l'enceinte.

13. Dispositif selon la revendication 11, **caractérisé en ce qu'**il comporte une caméra, la caméra étant équipée de la surface sensible.

14. Dispositif selon 1a revendication 11, **caractérisé en ce que** la surface sensible est une matrice de photodiodes.

15. Dispositif selon la revendication 14, **caractérisé en ce que** la matrice comporte des photodiodes sensibles en outre à la lumière visible.

16. Dispositif selon la revendication 11, **caractérisé en ce qu'**il comporte en outre des moyens pour former une image de lumière visible de l'environnement.

17. Dispositif selon la revendication 16, **caractérisé en ce qu'**il comporte en outre un écran vidéo pour visualiser au moins l'une des images de rayonnement ultraviolet et de lumière visible.

## Patentansprüche

1. Verfahren zur Fernlokalisierung von Quellen (14) von alpha-radioaktiven Teilchen in einer Umgebung (10, 30), bei dem man ein Gas, das Stickstoff als Scintillator enthält und die Umgebung füllt, benutzt, um die durch die Quellen (14) emittierten alpha-radioaktiven Teilchen in eine Photonenstrahlung umzuwandeln, und bei dem man auf einer photosensiblen Fläche ein Bild der Photonenstrahlung bildet.

2. Verfahren nach Anspruch 1, **dadurch gekennzeichnet, dass** man ein Stickstoff enthaltendes Gas benutzt, um die durch die Quellen (14) emittierten alpha-radioaktiven Teilchen in eine ultraviolette Photonenstrahlung umzuwandeln.

3. Verfahren nach Anspruch 1 oder 2, **dadurch gekennzeichnet, dass** man die Umgebung (30) mit einem Gehäuse abgrenzt, das im Wesentlichen Gas-undurchlässig ist und eine Wand (33) aufweist, die wenigstens lokal für die Photonenstrahlung durchlässig ist, man das Gehäuse mit Stickstoff enthaltendem Gas füllt und man das Bild der Photonenstrahlung auf der sensiblen Fläche bildet, durch die genannte Wand (33) hindurch.

4. Verfahren nach einem der Ansprüche 1 bis 3, **dadurch gekennzeichnet, dass** man das Bild der Photonenstrahlung ohne die Präsenz von sichtbarem Licht bildet.

5. Verfahren nach einem der Ansprüche 1 bis 3, **dadurch gekennzeichnet, dass** man das Bild der Photonenstrahlung durch ein Filter (23) hindurch bildet, das ultraviolette Strahlen selektiv durchlässt.

6. Verfahren nach einem der Ansprüche 1 bis 3, **dadurch gekennzeichnet, dass** man das Bild der Photonenstrahlung in Präsenz von künstlichem sichtbarem Licht bildet.

7. Verfahren nach einem der Ansprüche 1 bis 3, **dadurch gekennzeichnet, dass** man außerdem ein Bild des sichtbaren Lichts der Umgebung bildet.

8. Verfahren nach Anspruch 7, **dadurch gekennzeichnet, dass** man das Bild des sichtbaren Lichts unter einer künstlichen Beleuchtung der Umgebung realisiert.

9. Verfahren nach Anspruch 7, **dadurch gekennzeichnet, dass** man das Bild des sichtbaren Lichts und das Bild der Photonenstrahlung überlagert.

10. Verfahren nach einem der vorangehenden Ansprüche, **dadurch gekennzeichnet, dass** man die Luft als Scintillator benutzt, um die durch die Quellen (14) emittierten alpha-radioaktiven Teilchen in ultraviolette Strahlung umzuwandeln.

11. Vorrichtung zur Fernlokalisierung von Quellen von alpha-radioaktiven Teilchen in einer Umgebung, wobei diese Vorrichtung eine für ultraviolette Strahlen sensible Fläche (20), ein gasförmiges scintillierendes Medium, das Stickstoff enthält und die Umgebung füllt, und optische Einrichtungen (22) umfasst, um ein Bild der ultravioletten Strahlung der Umgebung auf der sensiblen Fläche abzubilden.

12. Vorrichtung nach Anspruch 11, **dadurch gekennzeichnet, dass** sie eine Gehäuse (30) umfasst, das im Wesentlichen Gas-undurchlässig ist, um die Umgebung abzugrenzen, und eine Wand aufweist, die wenigstens lokal für die Photonenstrahlung durchlässig ist, um das Bild der Photonenstrahlung auf der sensiblen Fläche zu bilden, wobei die sensible Fläche sich auf der Außenseite des Gehäuses befindet.

13. Vorrichtung nach Anspruch 11, **dadurch gekennzeichnet, dass** sie eine Kamera umfasst, wobei die Kamera mit der sensiblen Fläche versehen ist.

14. Vorrichtung nach Anspruch 11, **dadurch gekennzeichnet, dass** die sensible Fläche eine Photodioden-Matrix ist.

15. Vorrichtung nach Anspruch 14 **dadurch gekennzeichnet, dass** die Matrix Photodioden umfasst, die außerdem für sichtbares Licht sensibel sind.

16. Vorrichtung nach Anspruch 11, **dadurch gekennzeichnet, dass** sie außerdem Einrichtungen umfasst, um ein Bild des sichtbaren Lichts der Umgebung zu bilden.

17. Vorrichtung nach Anspruch 16, **dadurch gekennzeichnet, dass** sie außerdem einen Bildschirm umfasst, um wenigstens eines der Bilder der ultravioletten Strahlung und des sichtbaren Lichts zu visualisieren.

## Claims

1. A method of remotely locating sources (14) of α particles in an environment (10, 30), in which a gas containing nitrogen as the scintillator is used and fills the environment, in order to convert the α particles emitted by the sources (14) into photon radiation, and in which an image of the photon radiation is formed on a photo-sensitive surface.

2. A method according to claim 1, **characterized in that** a gas containing nitrogen is used to convert the α particles emitted by the sources (14) into ultraviolet photon radiation.

3. A method according to claim 1 or 2, **characterized in that** the environment is demarcated with an enclosure (30) substantially impermeable to gas and with a wall (32) at least locally transparent to the photon radiation, the enclosure being filled with gas containing nitrogen and the image of the photon radiation is formed on the sensitive surface through said wall (32).

4. A method according to any one of claims 1 to 3, **characterized in that** the image of the photon radiation is formed in the absence of visible light.

5. A method according to any one of claims 1 to 3, **characterized in that** the image of the photon radiation is formed through a filter (23) that selectively allows the passage of ultraviolet radiation.

6. A method according to any one of claims 1 to 3, **characterized in that** the image of the photon radiation is formed in the presence of artificial visible light.

7. A method according to any one of claims 1 to 3, **characterized in that** a visible light image of the environment is additionally formed.

8. A method according to claim 7, **characterized in that** the visible light image is produced under artificial illumination of the environment.

9. A method according to claim 7, **characterized in that** the visible light image and the photon radiation image are superimposed.

10. A method according to any one of the preceding claims, **characterized in that** air is used as a scintillator in order to convert the α particles emitted by the sources (14) into ultraviolet radiation.

11. A device for remotely locating sources of α particles in an environment, the device comprising a surface (20) sensitive to ultraviolet radiation, a gaseous scintillator medium that includes nitrogen and which fills the environment and optical means (22) in order to form an ultraviolet radiation image of the environment on the sensitive surface.

12. A device according to claim 11, **characterized in that** it comprises an enclosure (30) substantially impermeable to the gas in order to define the environment, and provided with a wall, at least locally transparent to ultraviolet radiation in order to form an image of the radiation on the sensitive surface which is arranged outside of the enclosure.

13. A device according to claim 11, **characterized in that** it comprises a camera, the camera being fitted with the sensitive surface.

14. A device according to claim 11, **characterized in that** the sensitive surface is a matrix of photodiodes.

15. A device according to claim 14, **characterized in that** the matrix comprises photodiodes additionally sensitive to visible light.

16. A device according to claim 11, **characterized in that** it additionally comprises means to form a visible light image of the environment.

17. A device according to claim 16, **characterized in that** it additionally comprises a video screen in order to display at least one of the ultraviolet radiation and visible light images.
